# EUROPÄISCHE PATENTSCHRIFT

(11) **EP 2 632 824 B1**
(45) Veröffentlichungstag und Bekanntmachung des Hinweises auf die Patenterteilung: **21.01.2015**
(21) Anmeldenummer: 11767978.7
(22) Anmeldetag: 04.10.2011
(51) Int. Cl.: B65G 1/137

(54) **LAGER- UND KOMMISSIONIERSYSTEM SOWIE VERFAHREN ZUM AUTOMATISCHEN ADRESSIEREN VON LAGERPLÄTZEN**
STORAGE AND ORDER-PICKING SYSTEM, AND METHOD FOR THE AUTOMATIC ADDRESSING OF STORAGE SPACES
SYSTÈME D'ENTREPOSAGE ET DE PRÉPARATION DE COMMANDE ET PROCÉDÉ D'ADRESSAGE AUTOMATIQUE D'ENTREPÔTS

(30) Priorität: 26.10.2010 DE 102010050461
(43) Veröffentlichungstag der Anmeldung: 04.09.2013
(73) Patentinhaber: SSI Schäfer Peem GmbH, 8051 Graz (AT)
(72) Erfinder: WINKLER, Max, A-8010 Graz (AT)
(74) Vertreter: Witte, Weller & Partner Patentanwälte mbB
(86) Internationale Anmeldenummer: PCT/EP2011/067290
(87) Internationale Veröffentlichungsnummer: WO 2012/055679

(56) Entgegenhaltungen:
- AT-U1- 7 005
- DE-A1- 10 128 177
- US-A1- 2007 050 080

## Beschreibung

Die vorliegende Erfindung betrifft ein Lager- und Kommissioniersystem sowie ein Verfahren zum automatischen Adressieren von Lagerplätzen, wobei Kommissionierdaten über einen Kommunikationsbus übertragen werden. Im Lager- und Kommissioniersystem wird lichtgeführt manuell kommissioniert ("Pick-by-Light") und/oder eingelagert ("Put-by-Light").
Die Dokumente AT 7 005 U1 und US 2007/050080 A1 offenbaren jeweils ein Lager- und Kommissoniersystem, gemäß dem Oberbegriff des Anspruchs 1, in welchem Lagerplätzen automatisiert Kommunikationsadressen zugewiesen werden, das zur manuellen lichtgeführten Auftragsabarbeitung eingereicht ist, aufweisend: mindestens ein Lager mit einer Vielzahl von Lagerplätzen, wobei jeder der Vielzahl von Lagerplätzen entweder frei ist oder einem Lagergut zugewiesen ist; eine Vielzahl von Anzeigeeinrichtungen, wobei jeder der Anzeigeeinrichtungen zumindest ein zugewiesener Lagerplatz zugeordnet ist, wobei jede der Anzeigeeinrichtungen an einem der zugeordneten und zugewiesenen Lagerplätze montiert ist und wobei jede der Vielzahl von Anzeigeeinrichtungen eine eindeutige Kommunikationsadresse aufweist; eine Steuereinrichtung, die datentechnisch mit den zugeordneten Anzeigeeinrichtungen verbunden ist und die eingerichtet ist, Kommissionierdaten an jede der zugeordneten Anzeigeeinrichtungen adressieren zu können, wobei eine adressierte zugeordnete Anzeigeeinrichtung basierend auf übermittelten Kommissionierdaten derart aktivierbar ist, dass eine Kommissionierperson visuell erkennt, von welchem zugewiesenen Lagerplatz Lagergüter zu entnehmen sind, und wobei die Steuereinrichtung eine Speichereinrichtung aufweist, in der für jeden Lagerplatz der Vielzahl von Lagerplätzen jeweils ein Lagerplatzort hinterlegt ist; und ein Netzwerk, das die zugeordneten Anzeigeeinrichtungen datentechnisch mit der Steuereinrichtung verbindet.

Beim klassischen manuellen Kommissionieren werden nach dem Prinzip "Mann-zur-Ware" kommissioniert. Dabei bewegt sich eine Kommissionierperson zum Zwecke des Kommissionierens in einem (dezentralen) Arbeitsbereich, wobei Bereitstellungseinheiten (z.B. Lagerbehälter, Kartons, Paletten) einen festen Plätzen im Lager in Form von Zugriffsplätzen bevorratet werden. In Übereinstimmung mit einem Kommissionierauftrag werden kundenseitig vorgegebene Artikel zusammengestellt, indem sie eingesammelt werden. Unter einem Auftrag bzw. einem Kommissionierauftrag versteht man beispielsweise eine Kundenbestellung, die sich aus einer oder mehreren Auftragspositionen (Auftragszeilen) mit einer jeweiligen Menge (Entnahmemenge) eines Artikels zusammensetzt.

Das lichtgeführte Kommissionierverfahren "Pick-by-Light" bietet signifikante Vorteile gegenüber klassischen, manuellen Kommissioniertechniken (Quelle: Wikipedia), bei denen Kommissionierlisten ohne weitere Unterstützung beim Auffinden von Entnahmeorten abgearbeitet werden. In diesen Fällen sucht sich die Kommissionierperson ihren Weg durch das Lager selbst. Bei Pick-by-Light-Systemen hingegen befindet sich vorzugsweise an jedem Zugriffsplatz (Lagerplatz) eine Signalleuchte mit einer (optionalen) Ziffernanzeige oder auch einem alphanumerischen Display, mit mindestens einer Quittiertaste (optional) sowie mit optionalen Eingabe- und/oder Korrekturtasten (siehe auch US 6,762,681 B1). Alternativ kann auch lediglich ein einziges Ziffernanzeigeelement zentral vorgesehen sein, wobei dann jeder Zugriffsplatz zumindest mit einer Signalleuchte versehen ist (vergleiche DE 20 2008 006 941 U1). Eine Signalleuchte wird bei demjenigen Zugriffsplatz aktiviert, wo die Artikel oder Stückgüter zu entnehmen sind, wobei die zu entnehmende Anzahl auf der Ziffernanzeige erscheint. Eine Entnahme kann mittels einer Quittiertaste bestätigt und die Bestandsänderung kann in Echtzeit an ein Lagerverwaltungssystem zurückgemeldet werden.

Eine Auftragsabwicklung erfolgt üblicherweise computergestützt mit einem Auftragsabwicklungssystem, welches in eine Kommissioniersteuerung integriert ist. Die Kommissioniersteuerung kann ein Warenwirtschaftssystem aufweisen. Außerdem kann die Kommissioniersteuerung ferner eine (Lager-)Platzverwaltung sowie eine Informationsanzeigesteuerung integriert haben. Die Kommissioniersteuerung wird üblicherweise durch eine Datenverarbeitungsanlage realisiert, die vorzugsweise zur verzögerungsfreien Datenübertragung und Datenbearbeitung im Online-Betrieb arbeitet.

Viele Kommissioniersysteme sind modular aufgebaut, wobei jedes Modul (z.B. Lagerplatzanzeige, Auftragsbehälteranzeige, Fördersegmente, Bediengeräte, etc) mit einem separaten Controller gesteuert werden kann. Deshalb benötigt die Kommissioniersteuerung für jedes Modul u.A. eine Ortsinformation, um die Module richtig (z.B. Reihenfolge) ansteuern zu können. Dies trifft im Besonderen auf Fördersegmente zu. Die Installation und Inbetriebnahme einer herkömmlichen Fördertechnik ist üblicherweise ein arbeitsintensiver Prozess. Das Layout und die Installation herkömmlicher Fördersysteme stellen oft Lösungen dar, die auf den jeweiligen Kunden maßgeschneidert sind. Eine Programmierung der Steuerung ist Teil dieser kundenspezifischen Lösungen. Die Steuerungssoftware ist genau wie die Fördertechnik selbst kundenspezifisch maßgeschneidert. Die einzelnen Segmente der Fördertechnik werden üblicherweise über einen Kommunikationsbus angesprochen. Eine initiale Adressierung der Teilnehmer (z.B. ein Fördersegment) erfolgte häufig manuell, indem ein Techniker durch das System läuft und jedem Teilnehmer physikalisch eine Kommunikationsadresse während der Inbetriebnahme zugewiesen hat.

Es gibt auch automatische Lösungen für die Adresszuweisung. Dort sind die Teilnehmer mit speziellen Leitungen untereinander verkettet ("Daisy Chain"), so dass eine übergeordnete Steuerung automatisch Adressen zuweisen kann, indem die einzelnen Teilnehmer nacheinander angesprochen werden und fortlaufende Adressen zugewiesen bekommen.

Bei dem Pick-by-Light-System der US 6,762,681 B1 weist, wie bereits oben erwähnt, jeder Lagerplatz bzw. Zugriffsplatz eine Anzeigeeinrichtung auf, die am Ort des Zugriffsplatzes angeordnet ist. Die Anzeigeeinrichtungen werden an einer Busschiene mit integrierter Busleitung montiert, um die Anzeigeeinrichtungen mit Energie und Daten zu versorgen. Jede Anzeigeeinrichtung weist eine herstellerseitig zugewiesene eindeutige Seriennummer auf, die es einem Controller ermöglicht, Daten mit den Anzeigeeinrichtungen zu kommunizieren. Die Anzeigeeinrichtungen zeigen dann z.B. einen Zugriffsplatz und eine Entnahmemenge an. Wenn die Kommissionierperson die entsprechende Anzahl von Lagergütern aus dem Zugriffsplatz bzw. Lagerplatz entnommen hat, kann sie der Steuerung die Abarbeitung über eine Quittiertaste signalisieren. Da aber jede Anzeigeeinrichtung mit ihren direkten Nachbarn verkettet sein muss und jeder Lagerplatz mit einer Anzeigeeinrichtung ausgerüstet ist, entsteht viel Aufwand beim Verkabeln der Anzeigeeinrichtungen. Neben der Datenleitung sind nämlich die zusätzlichen Daisy-Chain-Leitungen zum Verketten der Anzeigeeinrichtungen untereinander erforderlich. Die Verkabelung der Anzeigeeinrichtungen ist arbeitsintensiv. Die vielen Kabel, die zur Verbindung der einzelnen Anzeigeeinrichtungen benötigt werden, sind teuer.

Die US 2009/0115613 A1 offenbart ein RFID-basiertes Positionierungssystem.

Deshalb ist es eine Aufgabe der vorliegenden Erfindung ein Lager- und Kommissioniersystem bereitzustellen, bei dem die Installation der Anzeigeeinrichtungen mit anschließender Zuordnung der Anzeigeeinrichtungen zu den jeweiligen Lagerplatz so wenig wie möglich Arbeitsaufwand und so wenig wie möglich Verkabelung mit sich bringt. Die Adressierung (Zuweisung Kommunikationsadresse - Lagerplatz) soll automatisch erfolgen, ohne dass ein Techniker das Lager abschreiten muss, um die Adresse manuell aufzunehmen bzw. zu vergeben. Eine geometrische Größe des Lagerplatz soll der Lagerarbeiter vorzugsweise frei wählen können.

Diese Aufgabe wird durch ein Lager- und Kommissioniersystem nach Anspruch 1 gelöst

Die Erfindung ermöglicht also ein automatisches Zuweisen einer Kommunikationsadresse zu einem Lagerplatz. Ein Techniker muss das Lager nicht mehr abschreiten, um die Kommunikationsadressen der Anzeigeeinrichtungen manuell einem Lagerplatz(-ort) zuzuweisen, an dem die entsprechende Anzeigeeinrichtung angebracht bzw. montiert ist. Dies ist nicht zu verwechseln mit einem automatischen Adressierungsverfahren, bei dem jeder Anzeigeeinrichtung automatisch eine eindeutige, universelle Kommunikationsadresse zugewiesen werden kann. Gemäß der Erfindung wird automatisch erkannt, wo eine der Anzeigeeinrichtungen im Bezugssystem des Lagers (geographisch) sitzt bzw. an welchen Lagerplatz die Anzeigeeinrichtung montiert wurde. Dies wird mithilfe des Ortsmesssystems bewerkstelligt. Das Ortsmesssystem liefert einen Wert, der zumindest einer Raumkoordinaten oder einem Raumbereich im Bezugssystem des Lagers eindeutig entspricht. Über einen Vergleich der so ermittelten Montageorte der Anzeigeeinrichtungen mit bereits hinterlegten Lagerplatzorten erfolgt dann die endgültige Zuordnung der jeweiligen Kommunikationsadresse zum Lagerplatz. Vorzugsweise liegen die Lagerplatzorte und die Montageorte in einem Raumkoordinatensystem des Lagers vor, wobei die Lagereinrichtungen (Regale, etc) wiederum vorzugsweise entlang eines vordefinierten Rasters angeordnet sind.

Wenn die Lagerplatzorte und die Montageorte der Anzeigeeinrichtungen im gleichen Bezugssystem vorliegen, vereinfacht sich der Vergleich der für die Anzeigeeinrichtungen gemessenen Orte mit den fest hinterlegten Lagerplatzorten. Die Zuordnung erfolgt schneller.

Bei einer besonderen Ausgestaltung weist das Ortsmesssystem ferner mindestens eine elektrische Leitung auf, an der vorzugsweise eine vorgegebene feste Spannung anliegt, wobei die mindestens eine elektrische Leitung an jedem der Vielzahl von Lagerplätzen derart vorgesehen ist, dass jede der zugeordneten Anzeigeeinrichtungen mit der mindestens einen elektrischen Leitung verbindbar ist, wobei die entsprechende Anzeigeeinrichtung an dem ihr zugeordneten Lagerplatz montiert ist, so dass ein individualisierender Ohmscher Widerstandswert entfernungsabhängig messbar ist.

Die Ortsbestimmung erfolgt also z.B. über eine Widerstandsbestimmung. Je größer der Widerstand ist, desto weiter kann der Lagerplatz von einem Referenzpunkt entfernt liegen.

Alternativ oder ergänzend kann das Ortsmesssystem ferner mindestens ein optisch lesbares, fortlaufendes Entfernungsmaß (z.B. mehrspuriges digitales

Code-Lineal) aufweisen, welches an jedem der Vielzahl von Lagerplätzen derart vorgesehen ist, dass jede der zugeordneten Anzeigeeinrichtungen dem Entfernungsmaß so gegenüberliegt, dass die Messeinrichtung den jeweiligen Montageort (Code) mit Hilfe des Entfernungsmaß ablesen kann.

Hier kann beispielsweise eine Codierung eingesetzt werden, wie sie z.B. bei Drehgebern eingesetzt wird, um jederzeit eindeutig bestimmen zu können, wo genau sich ein Lesekopf relativ zu einer Messskala (Code-Lineal) befindet.

Des Weiteren kann das Ortsmesssystem alternativ oder ergänzend ein GPS-ähnliches Ortungssystem aufweisen, mit dem jeder Montageort im Bezugssystem "Lager" bestimmbar ist.

Exemplarisch kann jede Anzeigeeinrichtung eine Empfangseinheit aufweisen, um Signale von Sendern zu empfangen, die z.B. über eine Hallendecke verteilt angeordnet sind. Aus den jeweiligen Signalen, die eine Empfangseinheit von mehreren Sendern empfängt, kann die Position der Empfangseinheit über eine Triangulation bestimmt werden.

Ferner ist es von Vorteil, wenn das Ortsmesssystem eine Einrichtung zum Erfassen einer Laufzeit einer Signalübertragung zwischen einer der zugeordneten Anzeigeeinrichtungen und der Steuereinrichtung oder einem anderen Referenzpunkt aufweist, wobei in der Speichereinrichtung für jeden Lagerplatzort eine individualisierende Signallaufzeit hinterlegt ist.

Außerdem ist es von Vorteil, wenn die Messeinrichtung eine Vielzahl von Messsensoren aufweist, wobei jede der Vielzahl der Anzeigeeinrichtungen jeweils einen der Vielzahl von Messsensoren integriert hat.

Des Weiteren wird die oben genannte Aufgabe durch ein Verfahren nach Anspruch 9 gelöst.

Ein Lagerarbeiter kann also Anzeigeeinrichtungen an beliebigen Lagerplätzen montieren, um ein Kommissionierleitsystem initial zu konfigurieren. Der Lagerarbeiter kann auch nur ausgewählte Lagerplätze mit einer Anzeigeeinrichtung versehen. Der Lagerarbeiter kann alternativ alle Lagerplätze mit jeweils einer Anzeigeeinrichtung versehen. Der Lagerarbeiter kann bereits montierte Anzeigeeinrichtungen beliebig umsetzen und versetzen. Ferner ist es möglich, die geometrische Größe von Lagerplätzen jederzeit neu zu definieren. Mehrere Einheitslagerplätze können steuerungstechnisch zu einem benutzerdefinierten Lagerplatz zusammengefasst werden. Größere benutzerdefinierte Lagerplätze können in kleinere Lagerplätze aufgeteilt werden.

Bei all diesen Vorgängen konfiguriert sich das Kommissionier(-leit-)system selbständig. Jedem Lagerplatz, dem durch den Lagerarbeiter eine Anzeigeeinrichtung im Wege einer Montage zugeordnet wurde, bekommt automatisch eine eindeutige Kommunikationsadresse zugewiesen. Die eindeutige Kommunikationsadresse kann eine MAC-Adresse, die Seriennummer der Anzeigeeinrichtung oder Ähnliches sein. Die eindeutige Kommunikationsadresse kann auch im Wege eines bekannten automatischen Adressierungsverfahrens der Anzeigeeinrichtung durch eine übergeordnete Steuerung zugewiesen bzw. an diese vergeben werden. Das Ortsmesssystem ermöglicht die Ermittlung eines Werts für jede montierte Anzeigeeinrichtung, der einem Montageort der entsprechenden Anzeigeeinrichtung entspricht. Dieser Wert kann zum Beispiel ein Ohmscher Widerstand, eine Spannung, eine Stromstärke, eine Signallaufzeit, eine Koordinaten, ein Abstand oder Ähnliches sein. Wenn der Wert nicht in Form einer (Raum-)Koordinaten vorliegt, in der die Lagerorte der Lagerplätze in einer Speichereinrichtung in den Anzeigeeinrichtungen und/oder in der Steuerung hinterlegt sind, wird der Wert entsprechend umgewandelt. In diesem Fall werden Vergleichstabellen, Umwandlungsfunktionen oder Ähnliches auf den Wert angewendet, um die Koordinate einer jeweiligen Anzeigeeinrichtung im Bezugssystem der Lagerplätze auszudrücken. Selbstverständlich können auch die Koordinaten der Lagerplätze in das Bezugssystem der Anzeigeeinrichtungen umgewandelt werden.

Die Koordinaten der Lagerplätze sind üblicherweise vorab bekannt. Die Bestimmung der Koordinaten der Lagerplätze kann computergestützt erfolgen. Die Koordinaten können absolut oder relativ vorliegen. Relative Koordinaten können z.B. eine Reihenfolge der Anzeigeeinrichtungen ausdrücken.

Das Kommissioniersystem kann ferner über eine grafische Benutzeroberfläche verfügen, in die der Lagerarbeiter die spezifische Anordnung der Lagereinrichtungen, wie zum Beispiel eine relative Anordnung von Regalen zueinander, eingeben kann, und zwar vorzugsweise im Bezugssystem des Lagers selbst. Der Lagerarbeiter kann die Lage bzw. Anordnung der Regale grafisch auf einem Bildschirm angezeigt bekommen. All diese Maßnahmen erhöhen die Benutzerfreundlichkeit und stellen sicher, dass beim Konfigurieren des Lagers inklusive des Kommissionierleitsystems keine Fehler auftreten.

Vorzugweise ist jeder definierte Lagerplatz ein Einheitslagerplatz oder weist eine Gruppe aus direkt benachbarten Einheitslagerplätzen auf, wie es oben ausgeführt ist.

Bei einer besonderen Ausgestaltung werden Anzeigeeinrichtungen nur an solchen Lagerplätzen montiert, denen tatsächlich Lagergut zugewiesen ist oder zugewiesen werden soll.

Auf diese Weise ist es möglich, freie (unbelegte und nicht zugewiesene) Lagerplätze auf einfache Weise visuell kenntlich zu machen. Lagerplätze, denen kein Lagergut zugewiesen ist, weisen dann keine Anzeigeeinrichtung auf. Wenn der Lagerarbeiter neue Lagerplätze im Kommissionierleitsystem konfigurieren muss, erkennt er solche Lagerplätze, die noch immer zur Verfügung stehen, daran, dass an diesen keine Anzeigeeinrichtungen montiert sind.

Grundsätzlich ist die Installation der Anzeigeeinrichtungen auch deshalb sehr einfach, weil der Lagerarbeiter oder Techniker nicht darauf achten muss, welche Anzeigeeinrichtung an welchem Lagerplatz montiert wird. Bei der Installation und Inbetriebnahme müssen keine Seriennummern oder Ähnliches notiert werden und in Übereinstimmung mit einem Plan des Lagers gebracht werden, der zumindest die relative Lage der Lagerplätze widerspiegelt. Der Lagerarbeiter oder Techniker wählt eine Anzeigeeinrichtung aus einer Vielzahl von (identischen) Anzeigeeinrichtungen, die sich z.B. nur in ihrer spezifischen Seriennummer unterscheiden, aus und montiert diese am gewünschten Lagerplatz. Die restliche Konfiguration übernimmt die Erfindung. Mit der Montage der Anzeigeeinrichtung wird über das Netzwerk eine Kommunikationsverbindung zur Steuerung hergestellt. Gleichzeitig ist der Montageort festgelegt, der mit dem Ortsmesssystem, zumindest in äquivalenter Weise, bestimmt werden kann. Die Lagerorte sind bereits hinterlegt, so dass die Zuweisung einer eindeutigen Kommunikationsadresse automatisiert durchgeführt werden kann.

Vorzugsweise erfolgt das Definieren von Lagerplätzen lagergutoptimiert.

Dies bedeutet, dass zum Beispiel lange Lagergüter, wie zum Beispiel Stangen oder Rohre, so viele Einheitslagerplätze nebeneinander zugewiesen bekommen, dass das entsprechende Lagergut geometrisch genau in den so definierten Lagerplatz hinein passt.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen:
- Figur 1: ein Lager- und Kommissioniersystem gemäß der vorliegenden Erfindung mit einem Kommissionierleitsystem;
- Figur 2: ein Blockdiagramm einer Kommissioniersteuerung;
- Figur 3: eine Tabelle mit Werten zur Lagerplatzbestimmung sowie für ein Warenwirtschaftssystem;
- Figur 4: einen Ausschnitt eines Lager- und Kommissioniersystems gemäß der Erfindung;
- Figur 5: ein Blockdiagramm einer Anzeigeeinrichtung;
- Figur 6: eine weitere Tabelle, die eine Zuordnung zwischen den Messwerten des Ortsmesssystems zu (Raum-)Koordinaten eines bevorzugten Bezugssystems zeigt; und
- Figur 7: ein Flussdiagramm des Verfahrens gemäß der Erfindung.

In der nachfolgenden Beschreibung der Erfindung werden gleiche Teile und Merkmale mit gleichen Bezugszeichen versehen werden, wobei in der gesamten Beschreibung enthaltene Offenbarungen sinngemäß auf gleiche Teile und Merkmale mit gleichen Bezugszeichen übertragen werden können. Lageangaben, wie zum Beispiel "oben", "unten", "seitlich", "links", "rechts", etc., sind auf die unmittelbar beschriebene Figur bezogen und bei einer Lageänderung sinngemäß auf die neue Lage zu übertragen.

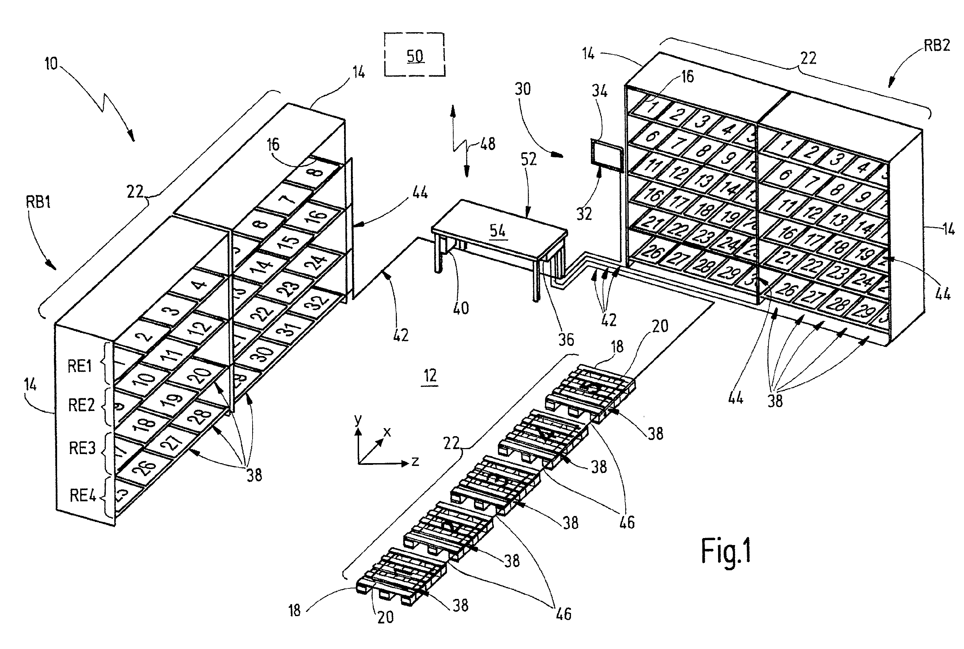

Fig. 1 zeigt eine perspektivische Ansicht eines Lager- und Kommissioniersystems 10, welches mit einem benutzerkonfigurierbaren (Kommissionier-)Leitsystem 30 ausgerüstet wurde. Sowohl das Lager- und Kommissioniersystem 10 als auch das Leitsystem 30 sind in der deutschen Patentanmeldung DE 10 2009 042 144, die am 14.09.2009 eingereicht wurde, ausführlich beschrieben. Hinsichtlich eines grundsätzlichen Aufbaus und einer grundsätzlichen Konfiguration eines derartigen Systems wird auf die DE 10 2009 042 144 verwiesen, die hier durch Bezugnahme voll integriert ist. Das Leitsystem 30 weist solche (Software-)Komponenten der Erfindung auf, die für eine automatische Adressbestimmung benötigt werden. Dies sind insbesondere Algorithmen, mit denen Lagerplätzen eine Kommunikationsadresse zugewiesen werden kann und mit denen Kommissionieraufträge erstellt und visualisiert werden können.

Das Lager- und Kommissioniersystem 10 kann ein gewöhnliches Lager 12 aufweisen, das Lagereinrichtung hier exemplarisch Regale 14 mit Regallagerplätzen 16 sowie Palettenlagerplätzen 20 aufweist, wobei die Palettenlagerplätze 20 als Bereitstellungsplätze bzw. Zugriffsplätze für Paletten 18 und die Regallagerplätze als Bereitstellungs- bzw. Zugriffsplätze für anderes Lagergut dienen. Die Regallagerplätze 16 können als Bereitstellungsplätze bzw. Zugriffsplätze für mit Stückgütern beladene Behälter, Kartons, Tablare, etc., aber auch für Stückgüter ohne Ladehilfsmittel (Ladungsträger) dienen. Allgemein stellen die Regallagerplätze 16 und Palettenlagerplätze 20 Lagerplätze 22 dar.

Links von der Fig. 1 ist ein erster Regalblock RB1 gezeigt, der exemplarisch zwei breitere Regale 14 aufweist. Die Regale 14 des Regalblocks RB1 weisen zum Beispiel vier Regalebenen RE1-RE4 auf. Jede Regalebene RE1-RE4 weist exemplarisch acht Lagerplätze 22 auf, die hier fortlaufend mit den Ziffern 1 bis 32 von links oben nach rechts unten nummeriert sind.

Rechts oben in der Fig. 1 ist ein zweiter Regalblock RB2 angeordnet, der zwei schmalere Regale 14 aufweist. Die schmaleren Regale 14 des Regalblocks RB2 sind hier in sechs Regalebenen RE unterteilt, von denen jede exemplarisch fünf Lagerplätze 22 aufweist die hier mit den Nummern 1 bis 35 pro schmalerem Regal 14 nummeriert sind.

Zwischen den beiden Regalplätzen RB1 und RB2 sind auf einem Hallenboden 5 (Euro-)Paletten gezeigt, die mit Ziffern 1 bis 5 nummerierte Palettenlagerplätze 20 repräsentieren.

Es versteht sich, dass das Lager 12 andere Lagereinrichtungen (zum Beispiel Hochregale etc.) aufweisen kann. Bei den Regalen 14 handelt es sich exemplarisch um Fachbodenregale, die Lagergüter auch ohne Ladungsträger aufnehmen können. Alternativ können auch Regale eingesetzt werden, bei denen zum Beispiel Lagerbehälter mit ihren umlaufenden Rändern in seitliche Halteprofile eingehängt werden, die wiederum an Regalstehern montiert sind (AKL). Der konkreten Ausgestaltung des Lagers 12 sind hier keine Grenzen gesetzt. Wie bereits in der DE 10 2009 042 144 beschrieben, kann jedes bereits existierende Lager 12 nachträglich mit dem benutzerkonfigurierbaren Leitsystem 30 nachgerüstet werden. Das Leitsystem 30 weist einen Leitrechner 32 auf, der vorzugsweise ein Display 34 umfasst. Das Leitsystem 30 weist ferner mindestens einen Controller 36 auf, der hier separat vom Leitrechner 32 angeordnet ist. Es versteht sich, dass der Controller 36 auch in den Rechner 32 integriert sein kann.

Des Weiteren ist in der Fig. 1 eine Datenbank 40 (zum Beispiel ein Host) gezeigt, der Benutzern des Lagers 12 bereitgestellt werden kann. Alternativ kann der Host 40 auch Teil des Leitsystems 30 sein.

Der Controller 36 ist üblicherweise über Controller-Leitungen 42 (Kommunikationsbus) mit den Lagerplätzen 22 verbunden. Jedem Lagerplatz 22 kann eine eigene Lagerplatzanzeige 38 (nachfolgend auch "Anzeigeeinrichtung 38" genannt) zugeordnet werden. Die Anzeigeeinrichtungen 38 können nachträglich installiert werden, indem sie zum Beispiel an die Regale 40 in entsprechend vorgesehene Profilschienen (Busschienen) geschraubt werden, in denen der Kommunikationsbus 42 verläuft.

Die Controller-Leitungen 42 können mit Verteilerleitungen 44 verbunden sein, die wiederum im Bereich der Regale 14 die verschiedenen Regalebenen RE mit Signalen vom Controller 36 versorgen. In den Regalebenen RE werden die Anzeigeeinrichtungen 38 einfach durch Aufstecken mit dem Kommunikationsbus verbunden. Zwischen verschiedenen Lagereinrichtungen (zum Beispiel Regalen, Paletten, etc.) können Verbindungsleitungen 46 eingesetzt werden, wie es exemplarisch zwischen den beiden Regalen 14 des ersten Regalblocks RB1 gezeigt ist. Die Verbindungsleitungen 46 können auch zwischen den Paletten 18 der Palettenlagerplätze 20 vorgesehen sein.

Alternativ kann die Kommunikation zwischen dem Controller 36, dem Leitrechner 32 und der Vielzahl von Anzeigeeinrichtungen 38 auch drahtlos erfolgen, wie es mithilfe eines Doppelpfeils 48 angedeutet ist.

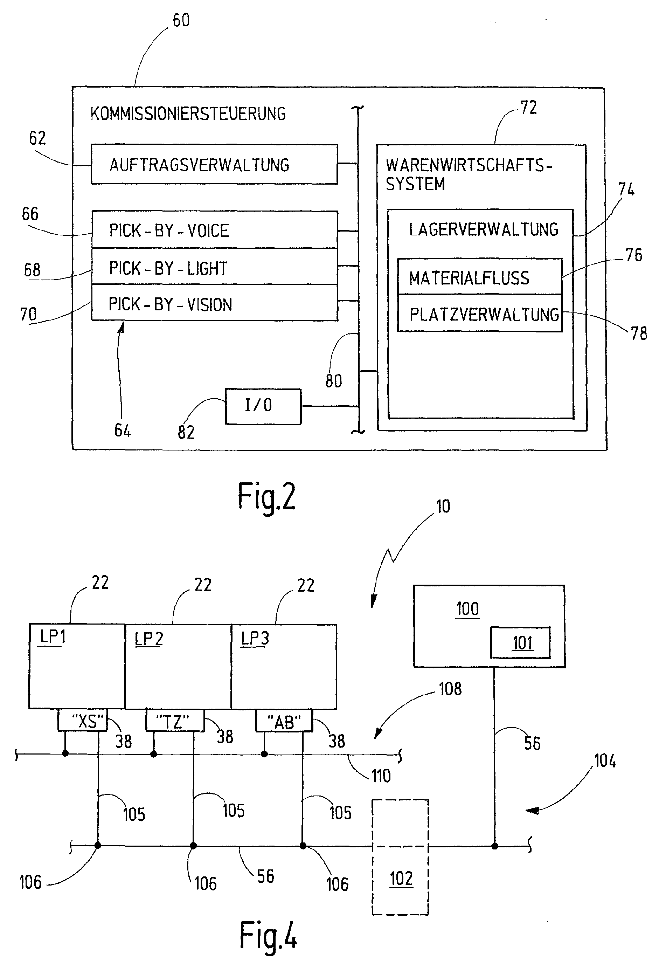

Der Host 40 kann optional mit einem übergeordneten Lagerverwaltungsrechner 50 verbunden sein oder direkt durch ihn implementiert sein. Der Lagerverwaltungsrechner 50 ist beim Benutzer des Lagers 12 üblicherweise bereits vorhanden. Der Lagerverwaltungsrechner 50 ist Teil einer Kommissioniersteuerung, wie sie nachfolgend im Zusammenhang mit Fig. 2 noch näher erläutert werden wird.

Das Lager 12 kann ferner einen Arbeitsplatz 52 aufweisen. Am Arbeitsplatz 52 kann ein Tisch 54 aufgestellt sein, an dem ein Lagerarbeiter Lagergut (Stückgüter, Artikel, Produkte, etc.) ablegen und zusammenstellen, das heißt kommissionieren, kann, wenn er das Lagergut aus den Lagerplätzen 22 zur Abarbeitung eines Kommissionierauftrags geholt hat. Beim Einlagern von Lagergut gilt natürlich umgekehrt, dass einzulagerndes Lagergut zuerst auf dem Tisch 54 ablegen werden kann, bevor es auf ausgewählte Lagerplätze 22 verteilt wird, die der Lagerarbeiter vom Leitrechner 32 visuell angezeigt bekommt.

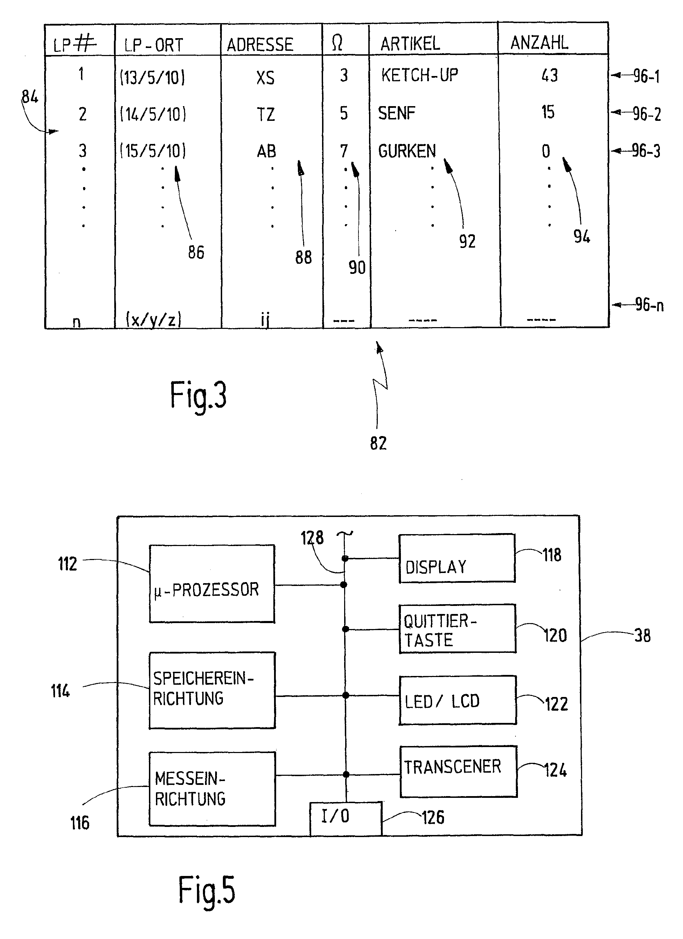

Es versteht sich, dass die Verteiler- und Verbindungsleitungen 44 und 46 nicht benötigt werden, wenn ein einziger Kommunikationsbus eingesetzt wird, wie es nachfolgend im Zusammenhang mit Fig. 3 noch näher erläutert werden wird.

Der Arbeitsplatz 52 wird vom Lagerarbeiter (Kommissionierperson) nach dem Kommissionierprinzip "Mann-zur-Ware" bedient. Der Lagerarbeiter kann entlang der Lagerplätze 22 auf- und abschreiten. Die Kommissionierung erfolgt lichtgeführt ("Pick-by-Light", PbL). Die Lagerplätze 22 können entweder frei sein oder sie sind belegt, indem ihnen jeweils ein spezieller Lagerguttyp datentechnisch zugewiesen ist. Es versteht sich, dass mehreren verschiedenen und zueinander entfernten Lagerplätzen 22 ein und derselbe Lagerguttyp zugewiesen sein kann. Wenn der Lagerarbeiter einen Kommissionierauftrag abarbeitet, leuchten solche Anzeigeeinrichtungen 38 von Lagerplätzen 22, aus denen Lagergut zu entnehmen ist, nacheinander oder gleichzeitig auf. Eine jeweilige Entnahmemenge kann entweder durch die jeweilige Anzeigeeinrichtung 38 oder auf dem zentralen Bildschirm 34 eingeblendet werden. Sobald der Lagerarbeiter die geforderte Anzahl von Lagergütern aus einem visualisierten Lagerplatz 22 entnommen hat, signalisiert er der Steuerung diesen Vorgang, indem er zum Beispiel eine Quittiertaste der Anzeigeeinrichtung 38 betätigt. Die Visualisierung erlöscht dann, so dass sich der Lagerarbeiter auftragszeilenweise durch das Lager 12 arbeiten kann, um alle Lagergüter einzusammeln, die ihm gemäß einem Kommissionierauftrag vorgegeben sind.

Es versteht sich, dass nicht alle Lagerplätze 22 jederzeit belegt sein müssen. Die Lagerplätze 22 müssen auch nicht alle gleich groß sein, was ihre Dimensionen betrifft. Zwar sind in der Fig. 1 Einheitslagerplätze gezeigt, das heißt alle Lagerplätze 22 innerhalb einer Lagereinrichtung sind gleich dimensioniert. Mehrere Einheitslagerplätze können aber auch (datentechnisch) zu einem einzigen Lagerplatz 22 zusammengefasst werden. So können zum Beispiel die ersten vier Lagerplätze 22 der ersten Regalebene RE1 im linken Regal 14 des Regalblocks RB1 zu einem einzigen Lagerplatz 22 zusammengefasst werden. Ein derartig zusammengefasster Lagerplatz 22 kann dann zum Beispiel zur Lagerung von Langgut (zum Beispiel Stangen, etc.) eingesetzt werden. Es versteht sich, dass beliebig viele Einheitslagerplätze 22 zu einem Lagerplatz 22 zusammengefasst werden können, so lange die Einheitslagerplätze 22 direkt zueinander benachbart sind. Zur Vereinfachung der nachfolgenden Beschreibung werden nachfolgend nur Einheitslagerplätze als Lagerplätze 22 behandelt werden.

Wie bereits in der DE 10 2009 042 144 beschrieben, ist eine der Stärken des Leitsystems 30 darin zu sehen, dass die Lagerplätze 38 auf einfache Art und Weise durch einen Lagerarbeiter konfiguriert werden können. Der Lagerarbeiter erhält mittels Software ein Abbild des tatsächlichen Lagers 12 zum Beispiel auf dem zentralen Bildschirm 34 angezeigt. Im ursprünglichen Zustand sind alle Lagerplätze 38 frei, das heißt sie sind nicht belegt. Wenn das Leitsystem 30 nachgerüstet wird, sind die Lagerplätze 38 auch noch nicht mit Anzeigeeinrichtungen 38 versehen. Der Lagerarbeiter oder ein Techniker, der das Leitsystem 30 in Betrieb nimmt, montiert vorzugsweise an allen Lagerplätzen 22 jeweils eine Anzeigeeinrichtung 38, indem er die Anzeigeeinrichtung 38 mit einem Kommunikationsbus 56 (vergleiche auch Fig. 3) verbindet. Es ist bevorzugt einen einzigen Kommunikationsbus 56 einzusetzen, der alle Lagerplätze 22 datentechnisch an eine (übergeordnete) Steuereinrichtung (wie zum Beispiel den Controller 36, den Leitrechner 32, den Lagerverwaltungsrechner 50 oder ähnliche Rechner) koppelt. Fig. 2 zeigt ein Blockdiagramm einer Kommissioniersteuerung 60.

Die Kommissioniersteuerung 60 der Fig. 2 kann modular aufgebaut sein und Folgendes aufweisen: eine Auftragsverwaltung 62, Kommissionierleitstrategien 64 (wie zum Beispiel Pick-by-Voice 66, Pick-by-Light 68, Pick-by-Vision 70 oder Ähnliches), ein Warenwirtschaftssystem 72, das wiederum eine Lagerverwaltung 50' (in Form des zuvor erläuterten Lagerverwaltungsrechners 50) aufweist, die wiederum einen Materialfluss 76 sowie eine Platzverwaltung 78 regeln kann, und/oder eine Schnittstellenverwaltung 82. Die Module 60 bis 82 sind größtenteils in Form von Software- und/oder Hardware implementiert. Die verschiedenen Module können über einen (oder mehrere) Kommunikationsbus(se) 80 miteinander kommunizieren. Die Kommissioniersteuerung 50 kann Teil eines Zentralrechners (nicht dargestellt) sein. Im Nachfolgenden wird die Kommissionierleitstrategie 68 ("Pick-by-Light") im Besonderen genutzt werden.

Die Auftragsverwaltung 62 sorgt dafür, dass eingehende Kommissionieraufträge zur Abarbeitung auf Arbeitsplätze 52 verteilt werden, wie einer exemplarisch in der Fig. 1 realisiert ist. Dabei spielen Faktoren wie Auslastung, Stückgutsortiment, Wegeoptimierung und Ähnliches eine Rolle. Dem Arbeitsplatz 52 können komplette Aufträge, aber auch nur Teilaufträge zur Abarbeitung zugewiesen werden. Dem Arbeitsplatz 52 ist üblicherweise eine Kommissionierzone zugewiesen, wie sie in der Fig. 1 z.B. durch die vier Regale 14 und die fünf Palettenlagerplätze 20 repräsentiert ist. Es versteht sich, dass innerhalb eines Lagers 12 mehrere derartige Arbeitsplätze 52 definiert werden können.

Die vorliegende Erfindung kommt im Wesentlichen bei zwei Konfigurationsszenarien zum Einsatz, nämlich zum einen bei der ersten Inbetriebnahme eines Lagers 12 durch einen Techniker, der an jedem Lagerplatz 12 jeweils mindestens eine Anzeigeeinrichtung 38 montiert und mit dem zuvor erwähnten Kommunikationsbus 56 verbindet, und zum anderen bei einer (Re-)Konfiguration der Lagerplätze 22 durch einen Lagerarbeiter, der eine (Lager-)Platzverwaltung beginnt oder ändert. Bei beiden Szenarien besteht ein Problem darin, dass einer übergeordneten Steuerung, wie zum Beispiel dem Leitrechner 32, mitgeteilt werden muss, welche Anzeigeeinrichtung 38 an welchem Lagerplatz 22 montiert wurde. Diese Information ist wichtig, damit die Kommissioniersteuerung 60 in die Lage versetzt wird, den Lagerarbeiter zum Zwecke einer Kommissionierung oder Einlagerung an den richtigen Ort im Lager 12 zu führen.

Um diese Aufgabe erfüllen zu können, benötigt die Kommissioniersteuerung 60 Informationen, von denen einige exemplarisch in der Tabelle 82 der Fig. 3 gezeigt sind.

Bezug nehmend auf Fig. 3 wird nachfolgend die Tabelle 82 spaltenweise von links nach rechts erklärt. Jede Zeile stellt einen Datensatz dar. Die erste Spalte repräsentiert Lagerplatznummern 84. Die zweite Spalte repräsentiert Lagerplatzorte, wobei das Lager 12 vorzugsweise als Bezugssystem für (Raum-)Koordinaten dient, mit denen die Lagerplatzorte 86 vorzugsweise absolut ausgedrückt werden. In der dritten Spalte sind eindeutige (Kommunikations-)Adressen 88 von Anzeigeeinrichtungen 38 wiedergegeben. Hierbei kann es sich zum Beispiel um Seriennummern, MAC-Adressen, automatisch vergebene Kommunikationsadressen oder Ähnliches handeln, über die eine jeweilige Anzeigeeinrichtung 38 eindeutig ansprechbar ist, um mit einer übergeordneten Steuerung kommunizieren zu können. In der vierten Spalte werden (Orts-)Koordinaten der jeweiligen Anzeigeeinrichtung 38 hinterlegt. Dies kann in Form von Raumkoordinaten des Lagers 12, das bereits als Bezugssystem für die Lagerplätze 22 (Spalte 1) dient, oder in Form einer äquivalenten Größe geschehen. Im Beispiel der Fig. 3 geschieht dies in Form von Widerstandswerten, wie es nachfolgend im Zusammenhang mit Fig. 4 noch näher erläutert werden wird. In der fünften Spalte ist ein Artikel- bzw. Lagerguttyp 92 wiedergegeben. In der sechsten Spalte kann eine jeweilige Anzahl 94 des zugehörigen Artikeltyps 92 angegeben werden. Jede Zeile der Tabelle 82 stellt einen zusammengehörenden Datensatz 96 dar. Es versteht sich, dass weitere Spalten mit zusätzlichen Informationen hinzugefügt werden können, wie zum Beispiel Artikelattribute, Gefahrgutklassen, etc.

Für die vorliegende Erfindung sind die ersten vier Spalten von besonderem Interesse, da anhand dieser Informationen jedem Lagerplatz 22 eine eindeutige Kommunikationsadresse 88 automatisiert zuweisbar ist. Die ersten vier Spalten dienen der Platzverwaltung 78 (vergleiche Fig. 2). Die ersten fünf Spalten können für die Lagerverwaltung 74 eingesetzt werden. Alle sechs Spalten der Tabelle 82 sind für das Warenwirtschaftssystem 72 interessant.

Bezug nehmend auf Fig. 4 ist ein Ausschnitt eines Lager- und Kommissioniersystems 10 gemäß der vorliegenden Erfindung gezeigt. Das System 10 der Fig. 4 weist eine übergeordnete Steuerung 100 (zum Beispiel die Kommissioniersteuerung 60 mit Lagerverwaltungsrechner 50) auf und kann optional untergeordnete Steuereinrichtungen 102 (zum Beispiel den Controller 36 und/oder den Leitrechner 32) aufweisen. Da Leitsystem 30 kann in den Lagerverwaltungsrechner 50 integriert sein. Ferner weist das System 10 ein Netzwerk 104 auf, das wiederum ein oder mehrere Kommunikationsbusse 56 aufweist, der bzw. die jede Anzeigeeinrichtung 38, die an einem Lagerplatz 22 zwecks (Lagergut-)Zuweisung montiert ist, zumindest der übergeordneten Steuerung 100 verbindet. In der Fig. 4 sind exemplarisch lediglich drei (Einheits-)Lagerplätze 22 (LP1 bis LP3) gezeigt. An jedem Lagerplatz 22 ist jeweils eine Anzeigeeinrichtung 38 montiert, die wiederum mit dem Kommunikationsbus 56 verbunden ist. Die Anzeigeeinrichtungen 38 stellen Knoten 106 des Netzwerks 104 dar. Im einfachsten Fall wird die Anzeigeeinrichtung 38 in eine (nicht dargestellte) Busleiste eingeklemmt, wodurch gleichzeitig die datentechnische Anbindung an den Kommunikationsbus 56 erfolgt.

Das System 10 weist ferner ein Ortsmesssystem 108 für die Anzeigeeinrichtungen 38 auf. In der Fig. 4 ist exemplarisch eine elektrische Leitung 110 gezeigt, die zum Ortsmesssystem 108 gehört. Die Leitung 110 kann als zusätzliche Leitung in die (nicht dargestellte) Busleiste integriert sein. Die Leitung 110 wirkt hier als linearer ohmscher Kontakt. Jede Anzeigeeinrichtung 38 ist mit der Leitung 110 verbunden, so dass jede Anzeigeeinrichtung 38 einen Ohmschen Wert messen kann, der einer jeweiligen Entfernung zu einem Ende der Leitung 110 entspricht. Pro Regalebene RE kann eine separate Leitung 110 vorgesehen werden. An jeder dieser Leitungen kann eine andere Spannung anliegen, um so zwischen den unterschiedlichen Leitungen unterscheiden zu können.

Jede der Anzeigeeinrichtungen 38 weist eine eindeutige, universelle Adresse 88 (vergleichbar zu einer MAC-Adresse in der TCP/IP-Welt) auf. Die Adresse 88 kann automatisiert durch die Steuerung 100 oder 102 vergeben werden. Über diese Adresse 88 erfolgt die eigentliche Kommunikation. Für die logische Aufgabe des Kommissionierens (oder jede andere Aufgabe, die eine Reihenfolge oder logische Positionsbestimmung innerhalb des Lagers 12 erfordert) wird die Reihenfolge-Information zum Beispiel aus einer Widerstandsmessung gewonnen. So können die drei Anzeigeeinrichtungen 38 der Fig. 3 zum Beispiel die universellen Adressen XS, AB, und TZ tragen. Als Widerstandswerte 90 könnten für XS 3 Ohm, für AB 8 Ohm und TZ 5 Ohm gemessen werden. Damit ist die logische und ordentliche Reihenfolge bestimmt, nämlich zuerst XS, dann TZ und dann AB. Die Widerstandswerte 90 entsprechen dabei wiederum (Raum-)Koordinaten im Bezugssystem des Lagers 12, so dass mit vorbekannten Raumkoordinaten der Lagerplätze 22 eine automatische Zuordnung der Adressen 88 zu den jeweiligen Lagerplätzen 22 erfolgen kann.

Das Ortsmesssystem 108 sollte so ausgelegt sein, dass der Messwert, der von der Anzeigeeinrichtung 38 an die übergeordnete Steuerung 100 oder die untergeordnete Steuerung 102 zurückgemeldet wird, eindeutig ist, wobei der Messwert äquivalent zu einer Raumkoordinaten bzw. einem Bereich im Raum ist.

Beim Beispiel der elektrischen Leitung 110 der Fig. 4 kann diese Voraussetzung erzielt werden, indem alle Lagerplätze 22 zum Beispiel über eine einzige Leitung 110 sequentiell miteinander verbunden sind. Alternativ kann die Leitung 110 mehrteilig aufgebaut sein, wobei jede Teilleitung, die dann jeweils einer fest definierten Gruppe von Lagerplätzen 22 zugeordnet ist bzw. an diesen Lagerplätzen 22 vorbeigeführt ist, mit einem eindeutigen Spannungs- oder Stromwert beaufschlagt wird.

Alternativ zur ohmschen Ausführung des Ortsmesssystems 108, wie es in Fig. 4 gezeigt ist, kann zum Beispiel ein optisches Ortsmesssystem 108 oder ein ortungsgestütztes Ortsmesssystem 108 eingesetzt werden.

Im Falle eines optischen Ortsmesssystems 108 wird die elektrische Leitung 110 durch einen mit einer Skala versehenen Streifen ersetzt, wobei die Skala zum Beispiel durch ein (digitales) Code-Lineal implementiert sein kann.

Im Falle eines ortungsgestützten Ortsmesssystems kann jede Anzeigeeinrichtung 38 zum Beispiel mit einem GPS-ähnlichen Empfanger ausgerüstet sein, der Signale von Sendern empfängt, die verteilt zum Beispiel an einer Hallendecke des Lagers 12 befestigt sind.

Die Anzeigeeinrichtungen 38 sind über Netwerkverbindungen 105 an das Netzwerk 104 angeschlossen. Das Netzwerk 104 kann ein Ethernet-basiertes Netzwerk sein. Die Netzwerkverbindungen 105 schließen mehrere Anzeigeeinrichtungen 38 von verschiedenen Lagerplätzen 22 zusammen. Die Netzwerkverbindungen 105 verbinden die Anzeigeeinrichtungen 38 des Weiteren mit der übergeordneten Steuerung 100 und/oder untergeordneten Steuerungen 102, wobei in Fig. 4 lediglich eine einzige untergeordnete Steuerung 102 gezeigt ist, die zum Beispiel durch den Controller 36 der Fig. 1 implementiert sein kann. Jedes Regal 14 der Fig. 1 könnte zum Beispiel mit einer derartigen untergeordneten Steuerung 102 verbunden sein. Eine untergeordnete Steuerung 102 macht immer dann Sinn, wenn sich Lagereinrichtungen zu Lagerbereichen zusammenfassen lassen. Die Steuerungen 100 und 102 können Daten jeweils global oder individuell an eine spezielle Anzeigeeinrichtung 38 adressieren. Ein Beispiel für eine globale Adressierung wird nachfolgend noch gegeben werden.

Die Netzwerkverbindungen 105 können normale oder schnelle Ethernet-Verbindungen sein. Selbstverständlich können neben dem Ethernet-Standard andere Netzwerktypen eingesetzt werden.

Bezug nehmend auf Fig. 5 wird nachfolgend ein Aufbau einer Anzeigeeinrichtung 38 näher beschrieben werden.

Die Anzeigeeinrichtung 38 weist vorzugsweise einen Mikroprozessor 112, eine Speichereinrichtung 114, eine Messeinrichtung 116, ein Display 118, eine Quittiertaste 120, eine Leuchte 122, eine Sender-/Empfängereinheit (Transceiver) 124 und/oder mindestens eine Schnittstelle 126 auf, die über einen internen Kommunikationsbus 80 miteinander verbunden sein können.

Der Mikroprozessor 112 hat im Wesentlichen die Aufgabe, Daten zu verarbeiten, die er von den Steuerungen 100 und/oder 102 adressiert übermittelt bekommt. Die Speichereinrichtung 114 dient z.B. zur Hinterlegung der (eindeutigen) Adresse 88 der Anzeigeeinrichtung 38 (MAC-Adresse, Seriennummer, durch übergeordnete Steuerung 102 zugewiesene Kommunikationsadresse, etc.). Als Speichereinrichtung 104 können EPROMs und/oder DRAMs eingesetzt werden. In der Speichereinrichtung 114 können des Weiteren Inventurdaten (Anzahl der aktuell bevorrateten Lagergüter), Abmessungen des Lagerplatzes, an den die Anzeigeeinrichtung 38 montiert ist, oder ähnliche Informationen hinterlegt sein.

Jede Anzeigeeinrichtung 38 kann eine eigene Messeinrichtung 116 aufweisen, wie zum Beispiel einen Strom- oder Spannungsmesser, einen optischen Lesekopf oder Ähnliches.

Mit dem Display 118 kann eine Entnahmemenge in Form von Ziffern visuell angezeigt werden. Dazu können z.B. LCDs oder LEDs eingesetzt werden.

Mit der Quittiertaste 120 kann ein Lagerarbeiter nach erfolgter Lagergutentnahme gegenüber der Anzeigeeinrichtung 38 signalisieren, dass der Entnahmevorgang abgeschlossen ist. Die Anzeigeeinrichtung 38 kann dann mit Hilfe des Mikroprozessors 112 diese Information verarbeiten und in Form eines Signals über die Schnittstelle 126 ins Netzwerk 104 an die Steuerung 100 oder 102 senden.

Die Leuchte 122 dient zur Visualisierung für den Lagerarbeiter, aus welchem Lagerplatz 22 Lagergut entnommen werden muss oder an welchen Lagerplatz 22 Lagergut verbracht werden muss. Die Leuchte 122 kann in Form von LEDs, LCDs oder Ähnlichem ausgeführt sein. Die Leuchte 122 leuchtet im aktivierten Zustand zum Beispiel grün, rot oder orange auf, um dem Lagerarbeiter den Lagerplatz 22 visuell kenntlich zu machen.

Mit Hilfe der Sende-/Empfängereinheit 124, die mit Infrarot, Ultraschall oder anderen elektromagnetischen Wellen betrieben werden kann, können zum Beispiel Identfikationsmarker ausgelesen werden, die ein Lagerarbeiter an sich trägt. Der Lagerarbeiter kann an seinem Handgelenk einen RFID-Marker mit sich tragen, der mit der Sende-/Empfängereinheit 124 wechselwirkt, wenn der Lagerarbeiter ein Lagergut im Nahbereich der Anzeigeeinrichtung 138 entnimmt oder dorthin abgibt. Es versteht sich, dass der Wirkungsradius der Sende-/Empfängereinheit 124 derart zu begrenzen ist, dass es zu keinen Fehlerkennungen durch benachbarte Anzeigeeinrichtungen 38 im Falle einer Entnahme oder Abgabe eines Lagergutes kommt.

Eine der Stärken des Lager- und Kommissioniersystems 10 der vorliegenden Erfindung ist darin zu sehen, dass die Anzeigeeinrichtungen 38 von einem Lagerarbeiter an beliebigen Lagerplätzen 22 angebracht werden können. Nach erfolgter Montage der Anzeigeeinrichtungen 38 kann selbständig eine Zuordnung einer eindeutigen Kommunikationsadresse 88 zu jedem entsprechenden Lagerplatz 22 durchgeführt werden. Die Anordnung und der Aufbau des Lagers 12 sind dazu vorzugsweise in den Raumkoordinaten des Bezugssystems "Lager 12" datentechnisch hinterlegt. Die Anordnung und der Aufbau (das heißt das Layout) des Lagers 12 lässt sich in einer grafischen Benutzeroberfläche (GUI, "graphical user interface") einfach zum Beispiel auf dem Bildschirm 34 darstellen. Der Lagerarbeiter kann die Anzeigeeinrichtung 38 den Lagerplätzen 22 entweder beliebig zuordnen oder er bekommt den Montageort grafisch auf dem Bildschirm 34 angezeigt.

Ferner besteht die Möglichkeit, dass initial alle Lagerplätze 22 mit Anzeigeeinrichtungen 38 ausgestattet werden oder dass nur solche Lagerplätze 22 ausgerüstet werden, die tatsächlich auch mit Lagergut belegt werden bzw. denen tatsächlich Lagergut zumindest zugewiesen wird.

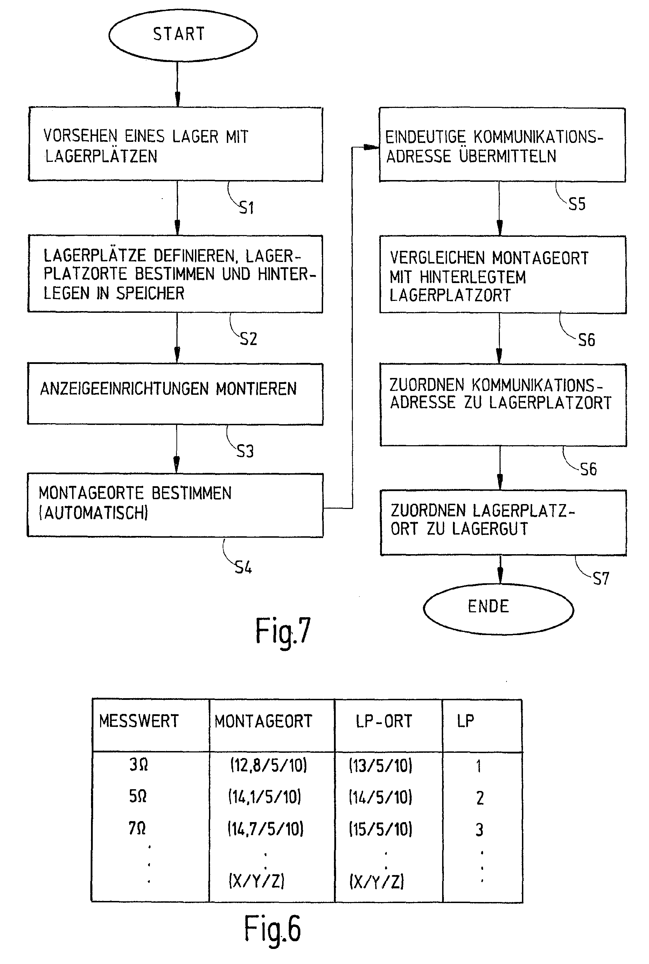

Sobald die Anzeigeeinrichtungen 38 an den Lagerplätzen 22 montiert sind, kann mit dem Ortsmesssystem 108 ein jeweiliger Montageort einer Anzeigeeinrichtung 38 bestimmt werden. Dazu kann die Anzeigeeinrichtung 38 beispielsweise den Widerstandswert 90 bestimmen, den sie über die elektrische Leitung 110 misst. Anschließend wird der Messwert 90 über den Kommunikationsbus 56 zusammen mit der eindeutigen Adresse 88 an die Steuerung 100 oder 102 übermittelt. Die Steuerung 100 oder 102 bestimmt dann durch Vergleichen des Messwerts 90 mit hinterlegten Montageorten (vgl. Fig. 6) die Raumkoordinaten des in Frage kommenden Lagerplatzorts 86, und somit welche Lagerplatznummer 84 zur jeweiligen montierten Anzeigeeinrichtung 38 passt. Dazu weist die Steuereinrichtung 100 bzw. 102 eine Speichereinrichtung 101 auf, in der für jeden Lagerplatz 22 ein Lagerplatzort 86 abgespeichert ist.

Bezug nehmend auf Fig. 6 sind die Messwerte 90 (vergleiche Figur 3), die mithilfe des Ortsmesssystems 108 für jede Anzeigeeinrichtung 38 bestimmbar sind, (Orts- bzw. Raum-)Koordinaten im Bezugssystem der Lagerplätze 22 gegenübergestellt. Diese Zuordnung kann zum Beispiel rechnerisch ermittelt werden, indem im Falle der zuvor beschriebenen Widerstandsmessung eine Funktion bestimmt wird, mit der jedem gemessenen Widerstand zum Beispiel ein relativer Abstand zu einem Referenzpunkt zugewiesen werden kann. Diese Abhängigkeit zwischen Messwert 90 und Ortskoordinate wird vorab bestimmt und hinterlegt. Selbstverständlich können die Koordinaten auch direkt bestimmt werden, wenn zum Beispiel ein lagerintegriertes Ortungssystem benutzt wird, wie es oben beschrieben ist (Empfänger an Anzeigeeinrichtung und Sender an der Hallendecke).

Alternativ können die Montageorte der Anzeigeeinrichtungen 38 über Laufzeiten der Signale zwischen der entsprechenden Anzeigeeinrichtung 38 und der Steuereinrichtung 100 bzw. 102 bestimmt werden. Dies erfordert aber, dass die Anzeigeeinrichtungen 38 sequentiell miteinander verbunden sind.

Bezug nehmend auf Fig. 7 ist ein Verfahren zum Konfigurieren eines Lager- und Kommissioniersystems 10 gezeigt, das zur manuellen lichtgeführten Auftragsabarbeitung eingerichtet ist. Das Verfahren weist die folgenden Schritte auf. In einem Schritt S1 wird ein Lager 12 mit einer Vielzahl von frei definierbaren Lagerplätzen 22 vorgesehen. In einem Schritt S2 werden die Lagerplätze 22 hinsichtlich ihrer Dimension definiert, ein entsprechender Lagerplatzort wird vorzugsweise im Raumkoordinatensystem des Lagers 12 bestimmt und in einer Speichereinrichtung 101 hinterlegt. In einem Schritt S3 werden die Anzeigeeinrichtungen 38 zumindest an den definierten Lagerplätzen 22 montiert. In einem Schritt S4 wird jeder Montageort automatisch bestimmt, und zwar mittels des Ortsmesssystems 108. In einem Schritt S 5 wird eine Kommunikationsadresse 88 von jeder montierten Anzeigeeinrichtung 38 zusammen mit dem Montageort oder einem dazu äquivalenten Wert 90 an die Steuereinrichtung 100 oder 102 über das Netzwerk 104 übermittelt. In einem Schritt S6 wird jeder der übermittelten Montageorte mit den hinterlegten Lagerplatzorten verglichen, um so zu bestimmen, an welchem Lagerplatz 22 die entsprechende Anzeigeeinrichtung 38 montiert wurde. Diesem Lagerplatz 22 kann dann die Adresse 88 der Anzeigeeinrichtung 38 als eindeutige Kommunikationsadresse zugeordnet werden.

Es versteht sich, dass die Erfindung auch auf eine Gruppe von Lagerplätzen 22 anwendbar ist, wobei die Gruppe zentral über eine Kommunikationsadresse angesprochen wird. In diesem Fall kann die Anzeigeeinrichtung 38 zusätzlich einen spezifischen Lagerplatz 22 der Lagerplatzgruppe anzeigen, indem z.B. neben der Entnahmemenge auch eine Lagerplatznummer (z.B. "4711") angezeigt wird, wobei jeder Lagerplatz der Lagerplatzgruppe entsprechend markiert ist. Der Lagerplatz "4711" kann z.B. ein entsprechend beschriftetes Schild aufweisen. Alternativ können Pfeile eingesetzt werden, um dem Lagerarbeiter die Richtung anzeigen, wo er den spezifischen Lagerplatz 22 einer Lagerplatzgruppe findet. In der Speichereinrichtung ist dann zu hinterlegen, wo die Anzeigeeinrichtung 38 in der Lagerplatzgruppe angeordnet ist. Eine Lagerplatzgruppe, die neun Lagerplätze 22 aufweist, die z.B. in einer 3x3-Matrix angeordnet sind, kann mit einer Anzeigeeinrichtung 38 ausgestattet werden, die zentral in der 3x3-Matric sitzt und mit Pfeilen zur Spezifizierung einzelner Lagerplätze 22 der Lagerplatzgruppe arbeitet. In der Speichereinrichtung 101 zusätzlich zu den Lagerplatzorten hinterlegt, zu welcher Lagerplatzgruppe ein entsprechender Lagerplatz 22 gehört. Außerdem kann hinterlegt werden, wo sich die (zentrale) Anzeigeeinrichtung 38 innerhalb der Lagerplatzgruppe befindet. Der Montageort der (zentralen) Anzeigeeinrichtung kann vom Lagerarbeiter oder der Steuerung vorgegeben werden.

## Patentansprüche

1. Lager- und Kommissioniersystem (10), in welchem Lagerplätzen (22) automatisiert Kommunikationsadressen zugewiesen werden und das zur manuellen lichtgeführten Auftragsabarbeitung eingerichtet ist, aufweisend:
mindestens ein Lager (12) mit einer Vielzahl von Lagerplätzen (22), wobei jeder der Vielzahl von Lagerplätzen (22) entweder frei ist oder einem Lagergut zugewiesen ist;
eine Vielzahl von Anzeigeeinrichtungen (38), wobei jeder der Anzeigeeinrichtungen (38) zumindest ein zugewiesener Lagerplatz (22) zugeordnet ist, wobei jede der Anzeigeeinrichtungen (38) an einem der zugeordneten und zugewiesenen Lagerplätze (22) montiert ist und wobei jede der Vielzahl von Anzeigeeinrichtungen (38) eine eindeutige Kommunikationsadresse (88) aufweist;
eine Steuereinrichtung (100, 102), die datentechnisch mit den zugeordneten Anzeigeeinrichtungen (38) verbunden ist und die eingerichtet ist, Kommissionierdaten an jede der zugeordneten Anzeigeeinrichtungen (38) adressieren zu können, wobei eine adressierte zugeordnete Anzeigeeinrichtung (38) basierend auf übermittelten Kommissionierdaten derart aktivierbar ist, dass eine Kommissionierperson visuell erkennt, von welchem zugewiesenen Lagerplatz (22) Lagergüter zu entnehmen sind, und wobei die Steuereinrichtung (100, 102) eine Speichereinrichtung (101) aufweist, in der für jeden Lagerplatz (22) der Vielzahl von Lagerplätzen (22) jeweils ein Lagerplatzort (86) in Koordinaten hinterlegt ist;
ein Netzwerk (104), das die zugeordneten Anzeigeeinrichtungen (38) datentechnisch mit der Steuereinrichtung (100, 102) verbindet;
**dadurch gekennzeichnet, dass** jede der Vielzahl von Anzeigevorrichtungen (38) eine Messeinrichtung (116) zur Erzeugung eines Messwerts (90) aufweist, und dass ein Ortsmesssystem (108) vorgesehen ist, das die Messeinrichtungen (116) aufweist und das eingerichtet ist, basierend auf dem Messwert (90) einen Montageort für jede montierte Anzeigeeinrichtung (38) zu bestimmen
und den so bestimmten Montageort mit den hinterlegten Lagerplatzorten (86) zu vergleichen, wobei jeder Montageort einem der hinterlegten Lagerplatzorte (86) eindeutig zuordenbar ist, um dem so bestimmten Montageort einen der hinterlegten Lagerplatzorte zuzuordnen, der zu dem so bestimmten Montageort passt, und eine der eindeutigen Kommunikationsadressen zuzuordnen.

2. Lager- und Kommissioniersystem nach Anspruch 1, wobei die Lagerplatzorte (86) und die Montageorte, vorzugsweise entlang eines vordefinierten Rasters, in einem Raumkoordinatensystem des Lagers (12) vorliegen.

3. Lager- und Kommissioniersystem nach Anspruch 1 oder 2, wobei das Ortsmesssystem (108) ferner mindestens eine elektrische Leitung (110) aufweist, an der vorzugsweise eine vorgegebene feste Spannung anliegt, wobei die mindestens eine elektrische Leitung (110) an jedem der Vielzahl von Lagerplätzen (22) derart vorgesehen ist, dass jede der zugeordneten Anzeigeeinrichtungen (38) mit der mindestens einen elektrischen Leitung (110) verbunden ist, wenn die entsprechende Anzeigeeinrichtung (38) an dem ihr zugeordneten Lagerplatz (22) montiert ist, so dass ein individualisierender ohmscher Widerstandswert (90) entfemungsabhängig messbar ist.

4. Lager- und Kommissioniersystem nach einem der Ansprüche 1 bis 3, wobei das Ortsmesssystem (108) ferner mindestens ein optisch lesbares, fortlaufendes Entfernungsmaß aufweist, welches an jedem der Vielzahl von Lagerplätzen (22) derart vorgesehen ist, dass jeder der zugeordneten Anzeigeeinrichtungen (38) dem Entfernungsmaß so gegenüberliegt, dass die Messeinrichtung (116) den jeweiligen Montageort am Entfernungsmaß ablesen kann.

5. Lager- und Kommissioniersystem nach einem der vorhergehenden Ansprüche, wobei das Ortsmesssystem (108) ein Ortungssystem aufweist, mit dem jeder Montageort bestimmbar ist.

6. Lager- und Kommissioniersystem nach einem der vorhergehenden Ansprüche, wobei das Ortsmesssystem (108) eine Einrichtung zum Erfassen einer Laufzeit einer Signalübertragung zwischen einer der zugeordneten Anzeigeeinrichtungen (38) und der Steuereinrichtung (100, 102) aufweist, wobei in der Speichereinrichtung (101) für jeden Lagerplatzort (86) eine individualisierende Signallaufzeit hinterlegt ist

7. Lager- und Kommissioniersystem nach Anspruch 1, wobei der Messwert (90) äquivalent zu einer Raumkoordinate oder einem Bereich im Raum ist.

8. Lager- und Kommissioniersystem nach einem der Ansprüche 3 oder 4, wobei die Messeinrichtung (116) eine Vielzahl von Messsensoren aufweist, wobei jede der Vielzahl der Anzeigeeinrichtungen (38) jeweils einen der Vielzahl von Messsensoren integriert hat.

9. Verfahren zum automatischen Konfigurieren eines Lager- und Kommissioniersystems (10), das zur manuellen lichtgeführten Auftragsabarbeitung eingerichtet ist und das ein Lager (12) mit einer Vielzahl von frei definierbaren Lagerplätzen aufweist, wobei an jedem definierten Lagerplatz eine Anzeigeeinrichtung (38) montiert ist, die eine eindeutige Kommunikationsadresse aufweist, und wobei für jeden definierten Lagerplatz ein Lagerplatzort in Koordinaten in einer Speichereinrichtung (101) hinterlegt ist, mit folgenden Schritten:
Definieren (S2) von Lagerplätzen (22),
Bestimmen eines Lagerplatzorts (86) für jeden definierten Lagerplatz (22) und Hinterlegen jedes bestimmten Lagerplatzorts (86) in der Speichereinrichtung (101);
Automatisches Bestimmen (S4) eines Montageorts (90) für jede montierte Anzeigeeinrichtung mittels eines Ortsmesssystems (108) basierend auf Messwerten, die von den montierten Anzeigeeinrichtungen (38) erzeugt werden;
Übermitteln (S5) einer eindeutigen Kommunikationsadresse (88) zwischen jeder montierten Anzeigeeinrichtung (38) und der Steuereinrichtung (100, 102) über ein Netzwerk (104), das die montierten Anzeigeeinrichtungen (38) datentechnisch mit der übergeordneten Steuereinrichtung (100, 102) verbindet; und
Vergleichen (S6) eines jeden Montageorts mit den hinterlegten Lagerplatzorten (86), um so jedem definierten Lagerplatz (22) eine der eindeutigen Kommunikationsadressen (88) zuzuordnen.

10. Verfahren nach Anspruch 9, wobei jeder definierte Lagerplatz (22) ein Einheitslagerplatz oder eine Gruppe aus direkt benachbarten Einheitslagerplätzen ist.

11. Verfahren nach Anspruch 9 oder 10, wobei die Anzeigeeinrichtungen (38) nur an solchen definierten Lagerplätzen (22) montiert sind, denen tatsächlich Lagergut zugewiesen ist oder wird.

12. Verfahren nach einem der Ansprüche 9 bis 11, wobei die Lagerplätze (22) lagergutoptimiert definiert werden.

## Claims

1. A storage and order-picking system (10), wherein communication addresses are assigned automatically to storage spaces (22), the system being configured for manual light-guided order processing and comprising:
at least one warehouse (12) having a plurality of storage spaces (22), wherein each of the plurality of storage spaces (22) is either free or has assigned one storage good;
a plurality of display devices (38), wherein each of the display devices (38) is allocated to at least one assigned storage space (22), wherein each of the display devices (38) is mounted to one of the allocated and assigned storage spaces (22), and wherein each of the plurality of display devices (38) comprises a measuring device (116) for generating a measured value (90) as well as a unique communication address (88);
a control device (100, 102) which is data-connected to the allocated display devices (38) and which is configured to allow addressing of order-picking data to each of the allocated display devices (38), wherein an addressed allocated display device (38) can be activated based on transmitted order-picking data such that an order-picking person visually recognizes from which one of the assigned storage spaces (22) storage goods are to be removed, and wherein the control device (100, 102) comprises a memory device (101), where respectively one storage-space location (86) is recorded in terms of coordinates for each storage space (22) of the plurality of storage spaces (22);
a network (104), which data-connects the allocated display devices (38) to the control device (100, 102); and
a location-measuring system (108) which comprises the measuring devices (116) and which is configured to determine, based on a measured value (90), a mounting location for each mounted display device (38) and to compare the so-determined mounting location with the recorded storage-space location (86), wherein each of the mounting locations is uniquely allocatable to one of the recorded storage-space locations (86), in order to allocate one of the recorded storage-space locations, which matches to the so-determined mounting location, and one of the unique communication addresses to the so-determined mounting location.

2. The storage and order-picking system of claim 1, wherein the storage-space locations (86) and the mounting location are present in a spatial coordinate system of the warehouse (12), preferably along a predefined grid.

3. The storage and order-picking system of claim 1 or 2, wherein the location-measuring system (108) further comprises at least one electrical line (110), which is preferably supplied with a fixed default voltage, wherein the at least one electrical line (110) is provided at each of the plurality of storage spaces (22) such that each of the allocated display devices (38) is connected to the at least one electrical line (110), if the corresponding display device (38) is mounted to the storage space (22) allocated thereto, so that an individualizing ohmic resistance value (90) can be measured dependent on distance.

4. The storage and order-picking system of one of the claims 1 to 3, wherein the location-measuring system (108) further comprises at least one optically readable continuous distance measure, which is provided at each of the plurality of storage spaces (22), such that each of the allocated display devices (38) is arranged adjacent to the distance measure, so that the measuring device (116) can read the respective mounting location from the distance measure.

5. The storage and order-picking system of one of the preceding claims, wherein the location-measuring system (108) comprises a locating system which is capable of determining each of the mounting locations.

6. The storage and order-picking system of one of the preceding claims, wherein the location-measuring system (108) comprises a device for detecting a run time of a signal transmission between one of the allocated display devices (38) and the control device (100, 102), wherein an individualizing signal run time is recorded in the memory device (101) for each of the storage-space locations (86).

7. The storage and order-picking system of claim 1, wherein the measured value (90) is equivalent to a spatial coordinate, or a region in space.

8. The storage and order-picking system of one of claims 3 or 4, wherein the measuring device (116) comprises a plurality of measuring sensors, wherein each of the plurality of display devices (38) has respectively integrated one of the plurality of measuring sensors.

9. A method for automatically configuring a storage and order-picking system (10), which is configured for manual light-guided order processing and comprises a warehouse (12) including a plurality of storage spaces, which can be defined freely, wherein one display device (38) having a measuring device (116) is mounted to each defined storage space, the display device having a unique communication address, and wherein for each defined storage space one storage-space location is recorded in a memory device (101) in terms of coordinates, the method comprising the steps of:
defining (S2) storage spaces (22),
determining one storage-space location (86) for each defined storage space (22) and recording each determined storage-space location (86) in the memory device (101);
automatically determining (S4) one mounting location (90) for each mounted display device by means of a location-measuring system (108), which comprises the measuring device (116), based on measured values generated by the mounted display devices (38);
transmitting (S5) a unique communication address (88) between each mounted display device (38) and the control device (100, 102) via a network (104), which data-connects the mounted display devices (38) to a control device (100, 102); and
comparing (S6) each one of the mounting locations to the recorded storage-space locations (86) for allocating one of the unique communication addresses (88) to each of the defined storage spaces (22).

10. The method of claim 9, wherein each one of the defined storage spaces (22) is a unit-storage space, or a group of directly adjacent unit-storage spaces.

11. The method of claim 9 or 10, wherein the display devices (38) are only mounted on such defined storage spaces (22) which actually have, or will be, assigned storage goods.

12. The method of one of claims 9 to 11, wherein the storage spaces (22) are defined in a storage-good-optimized manner.

## Revendications

1. Système (10) d'entreposage et d'expédition, dans lequel des adresses de communication sont attribuées automatiquement à des emplacements d'entreposage (22), le système étant conçu pour une exécution des commandes par guidage lumineux manuel et présentant :
au moins un entrepôt (12) présentant plusieurs emplacements d'entreposage (22), chacun des différents emplacements d'entreposage (22) étant libre ou attribué à un produit entreposé,
plusieurs dispositifs d'affichage (38), au moins un emplacement d'entreposage (22) attribué étant associé à chacun des dispositifs d'affichage (38), chacun des dispositifs d'affichage (38) étant monté sur un des emplacements d'entreposage (22) associés et attribués, chacun des différents dispositifs d'affichage (38) présentant une adresse de communication (88) univoque,
un dispositif de commande (100, 102) raccordé techniquement pour l'échange de données aux dispositifs d'affichage (38) associés et conçu pour pouvoir adresser des données d'expédition à chacun des dispositifs d'affichage (38) associé, un dispositif d'affichage (38) associé et adressé pouvant être activé sur la base des données d'expédition transmises de telle sorte qu'un opérateur d'expédition voit visuellement dans quel emplacement d'entreposage (22) attribué les produits entreposés doivent être repris, le dispositif de commande (100, 102) présentant un dispositif de mémoire (101) dans lequel le site (86) d'un emplacement d'entreposage est conservé en coordonnées pour chaque emplacement d'entreposage (22) parmi les différents emplacements d'entreposage (22),
un réseau (104) qui relie techniquement pour échange de données les dispositifs d'affichage (38) associés avec le dispositif de commande (100, 102),
**caractérisé en ce que**
chacun des différents dispositifs d'affichage (38) présente un dispositif de mesure (116) qui forme une valeur de mesure (90) et **en ce qu'**un système (108) de mesure de site est prévu, présente les dispositifs de mesure (116) et est conçu pour, sur la base de la valeur de mesure (90), déterminer un site de montage pour chaque dispositif d'affichage (38) monté et comparer le site de montage ainsi défini avec les sites (86) d'emplacement d'entreposage conservés en mémoire, chaque site de montage pouvant être associé de manière univoque à l'un des sites (86) d'emplacement d'entreposage conservés en mémoire pour associer aux sites de montage ainsi définis l'un des sites d'emplacement d'entreposage conservés en mémoire qui s'adapte au site de montage ainsi déterminé, et de lui associer une des adresses de communication univoque.

2. Système d'entreposage et d'expédition selon la revendication 1, dans lequel les sites (86) d'emplacement d'entreposage et les sites de montage sont disposés dans un système de coordonnées spatiales de l'entrepôt (12) suivant une trame prédéfnie.

3. Système d'entreposage et d'expédition selon les revendications 1 ou 2, dans lequel le système (108) de mesure de site présente en outre au moins un conducteur électrique (110) sur lequel une tension de préférence fixe est appliquée, le ou les conducteurs électriques (110) étant prévus en chacun des différents emplacements d'entreposage (22) de telle sorte que chacun des dispositifs d'affichage (38) associé soit relié au conducteur ou aux conducteurs électriques (110) lorsque le dispositif d'affichage (38) concerné est monté sur l'emplacement de montage (22) qui lui est associé, de telle sorte qu'une valeur (90) de résistance ohmique individuelle puisse être mesurée en fonction de la distance.

4. Système d'entreposage et d'expédition selon l'une des revendications 1 à 3, dans lequel le système (108) de mesure de site présente en outre au moins une mesure permanente de distance lisible optiquement, prévue sur chacun des différents emplacements d'entreposage (22) de telle sorte que chacun des dispositifs d'affichage (38) associé soit situé face à la mesure de distance et que le dispositif de mesure (116) puisse lire le site de montage particulier sur la mesure de distance.

5. Système d'entreposage et d'expédition selon l'une des revendications précédentes, dans lequel le système (108) de mesure de site présente un système de localisation permettant de déterminer chaque site de montage.

6. Système d'entreposage et d'expédition selon l'une des revendications précédentes, dans lequel le système (108) de mesure de site présente un dispositif de saisie du temps de parcours de la transmission de signaux entre l'un des dispositifs d'affichage (38) associé et le dispositif de commande (100, 102), un temps de parcours individuel de signal étant conservé dans le dispositif de mémoire (101) pour chaque site (86) d'emplacement d'entreposage.

7. Système d'entreposage et d'expédition selon la revendication 1, dans lequel la valeur de mesure (90) est équivalente à une coordonnée spatiale ou une zone de l'espace.

8. Système d'entreposage et d'expédition selon l'une des revendications 3 ou 4, dans lequel le dispositif de mesure (116) présente plusieurs capteurs de mesure, chacun des différents dispositifs d'affichage (38) intégrant l'un des différents capteurs de mesure.

9. Procédé de configuration automatique d'un système (10) d'entreposage et d'expédition conçu pour une exécution des commandes à guidage lumineux manuel et qui présente un entrepôt (12) doté de plusieurs emplacements d'entreposage aptes à être définis librement, un dispositif d'affichage (38) étant monté sur chaque emplacement d'entreposage défini et présentant une adresse de communication univoque, un site d'emplacement de montage étant conservé en coordonnées dans un dispositif de mémoire (101) pour chaque emplacement d'entreposage défini, le procédé comportant les étapes suivantes :
définition (S2) d'emplacements d'entreposage (22),
détermination d'un site (86) d'emplacement de montage pour chaque emplacement d'entreposage (22) défini et conservation de chaque site (86) d'emplacement de montage défini dans le dispositif de mémoire (101),
détermination automatique (S4) d'un site de montage (90) pour chaque dispositif d'affichage monté, au moyen d'un système de mesure de localisation (108) basé sur des valeurs de mesure formées par les dispositifs d'affichage (38) montés,
transmission (S5) d'une adresse univoque de communication (88) entre chaque dispositif d'affichage (38) monté et le dispositif de commande (100, 102) par l'intermédiaire d'un réseau (104) qui relie techniquement pour échange de données le dispositif d'affichage (38) monté et le dispositif de commande (100, 102) d'ordre hiérarchique plus élevé et
comparaison (S6) de chaque site de montage avec les sites (86) d'emplacement de montage conservés en mémoire pour ainsi associer à chaque emplacement de montage (22) défini l'une des adresses univoques de communication (88).

10. Procédé selon la revendication 9, dans lequel chaque emplacement de montage (22) défini est un emplacement de montage unitaire ou un groupe d'emplacements de montage unitaires directement voisins.

11. Procédé selon les revendications 9 ou 10, dans lequel le dispositif d'affichage (38) ne soit monté que sur les emplacements de montage (22) définis auxquels un produit à entreposer a été ou est effectivement attribué.

12. Procédé selon l'une des revendications 9 à 11, dans lequel les emplacements d'entreposage (22) sont définis de manière à optimiser l'entreposage des produits.
